# EUROPÄISCHE PATENTSCHRIFT

(11) **EP 1 464 882 B1**
(45) Veröffentlichungstag und Bekanntmachung des Hinweises auf die Patenterteilung: **17.08.2005**
(21) Anmeldenummer: 03007674.9
(22) Anmeldetag: 03.04.2003
(51) Int. Cl.: F16L 37/084

(54) **Rohrkupplung**
Pipe coupling
Raccord de tuyau

(43) Veröffentlichungstag der Anmeldung: 06.10.2004
(73) Patentinhaber: TI Automotive (Fuldabrück) GmbH, 34277 Fuldabrück (DE)
(72) Erfinder: Rohde, Reiner, Dipl.-Ing., 34323 Malsfeld (DE); Rose, Andreas, Dipl.-Ing., 34246 Vellmar (DE); Thomke, Thorsten, Dipl.-Ing., 34225 Baunatal (DE); Szczepaniak, Andreas, Dipl.-Ing., 34253 Lohfelden (DE)
(74) Vertreter: Rohmann, Michael, Dr.

(56) Entgegenhaltungen:
- EP-A- 0 728 981
- DE-A- 3 143 015
- DE-A- 3 440 753
- US-A- 5 683 117

## Beschreibung

Die Erfindung betrifft eine Rohrkupplung für Rohrleitungen mit einem Kupplungsgehäuse, das an zumindest einer Stirnseite eine Aufnahmekammer für die Aufnahme eines an einem Rohrleitungsende angeschlossenen Steckers mit zumindest einem nach außen vorkragenden Rastvorsprung aufweist, wobei in der Aufnahmekammer zumindest eine die Aufnahmekammeröffnung verengende Haltefeder vorgesehen ist, wobei die Haltefeder beim Einstecken des Steckers durch Einwirkung des Rastvorsprunges elastisch aufweitbar ist und wobei der Rastvorsprung im eingesteckten Zustand des Steckers die Haltefeder rastverbindungsbildend hinterfasst. Solche Kupplungen sind z.B. aus der Druckschrift EP- 728 981-A bekannt.

Eingesteckter Zustand des Steckers meint hier und nachfolgend den endgültigen korrekten Einsteckzustand des Steckers, in dem eine Rastverbindung zwischen Stecker und Kupplungsgehäuse vollständig und korrekt hergestellt worden ist.

Rohrleitung meint im Rahmen der Erfindung insbesondere eine Rohrleitung für ein flüssiges oder gasförmiges Medium, wobei die Rohrleitung vorzugsweise aus Kunststoff, Gummi oder Metall besteht. Der Stecker kann als separates Bauelement an dem Rohrleitungsende vorgesehen sein bzw. an die Rohrleitung angeschlossen sein. Im Falle einer Rohrleitung aus Kunststoff kann der Stecker über ein geeignetes Profilelement, beispielsweise ein Tannenbaumprofil im Inneren der Leitung fixiert sein. Der Stecker kann jedoch auch am Ende der Rohrleitung aus Kunststoff stoffschlüssig verbunden sein, beispielsweise rotationsverschweißt sein. Im Falle einer Rohrleitung aus Gummi ist ein in die Rohrleitung eingeschobener Stecker zweckmäßigerweise zusätzlich mit einer Schelle fixiert. Wenn die Rohrleitung aus Metall besteht, ist die Steckergeometrie normalerweise an das Rohrleitungsende angeformt. Dann ist also der Stecker kein separates Bauteil.

Grundsätzlich kann die erfindungsgemäße Rohrkupplung bzw. das erfindungsgemäße Kupplungsgehäuse an beiden Stirnseiten eine Aufnahmekammer für die Aufnahme eines Steckers aufweisen. Es liegt aber auch im Rahmen der Erfindung, dass die Rohrkupplung bzw. das Kupplungsgehäuse an der zweiten Stirnseite ein Kupplungsende aufweist, auf das eine Rohrleitung, insbesondere eine flexible Rohrleitung bzw. eine als Schlauchleitung ausgebildete Rohrleitung aufschiebbar ist. Dann ist zweckmäßigerweise ein außen gezacktes Dornprofil am Kupplungsende vorgesehen. Weiterhin kann dieses Kupplungsende jedoch auch derart angeformt sein, dass es z. B. mit einer Kunststoffleitung stoffschlüssig verbunden werden kann. Dann weist das Kupplungsende eine Ringnut zur Aufnahme einer Rohrwandung auf, deren Breite sich in Richtung der Nuttiefe verjüngt.

Dass die Haltefeder die Aufnahmekammeröffnung der Aufnahmekammer verengt, meint im Rahmen der Erfindung, dass der Innendurchmesser der Aufnahmekammer im Bereich der Haltefeder bzw. an der Stelle, an der die Haltefeder vorgesehen ist, geringer ist als ohne Haltefeder. Rastvorsprung des Steckers meint im Rahmen der Erfindung bevorzugt einen ringförmigen Vorsprung, d. h. einen über den Umfang des Steckers bzw. über den Umfang des hohlzylinderförmigen Steckerendes umlaufenden Vorsprung, der beispielsweise als umlaufende Wandungsverdickung des Steckers ausgebildet sein kann. Wie oben bereits dargelegt, ist mit dem eingesteckten Zustand des Steckers der endgültige Einsteckzustand gemeint, in dem die Rastverbindung vollständig und korrekt hergestellt ist.

Bei den aus der Praxis bekannten Rohrkupplungen der eingangs beschriebenen Art kann die Rastverbindung zwischen Stecker und Kupplungsgehäuse auf einfache Weise manuell bzw. per Hand durch Druck auf die Haltefeder gelöst werden. Die Haltefeder ist in der Regel U-förmig ausgebildet und weist Rastschenkel sowie eine die Rastschenkel verbindende U-Basis auf. Durch leichten manuellen Druck auf die U-Basis werden die Rastschenkel auseinandergespreizt und die Rastverbindung auf diese Weise gelöst. Das hat aber den Nachteil, dass die Rastverbindung in jedem Zustand, insbesondere auch im druckbeaufschlagten und zugbelasteten Betriebszustand leicht unbeabsichtigt gelöst werden kann. In Kraftstoffleitungen hat das ein sofortiges Austreten von Kraftstoff zur Folge. - Im Übrigen gibt es Stecker, deren über den Umfang des Steckers umlaufender ringförmiger Rastvorsprung abgerundete Kanten aufweist. Bei einer Zugbelastung einer Rastverbindung mit einem solchen Stecker können Querkräfte auf die Haltefeder einwirken, die im Extremfall zum selbständigen Öffnen der Rastverbindung führen.

Demgegenüber liegt der Erfindung das technische Problem zugrunde, eine Rohrkupplung der eingangs genannten Art anzugeben, bei der ein unbeabsichtigtes Öffnen der Rastverbindung im zugbelasteten Zustand funktionssicher und mit einfachen Mitteln vermieden werden kann.

Zur Lösung dieses technischen Problems lehrt die Erfindung eine Rohrkupplung der eingangs beschriebenen Art, welche dadurch gekennzeichnet ist, dass in der Aufnahmekammer zumindest ein Blockierelement vorgesehen ist, welches Blockierelement eine Aufweitung der Haltefeder im eingesteckten und verrasteten Zustand des Steckers bei Zugbelastung der Rastverbindung blockiert und bei Zugentlastung nicht blockiert.

Zugbelastung der Rastverbindung meint, dass Zugkräfte auf den Stecker bzw. das Kupplungsgehäuse einwirken und Stecker und Kupplungsgehäuse gleichsam auseinandergezogen werden. Eine solche Zugbelastung resultiert insbesondere im druckbeaufschlagten Betriebszustand, wenn beispielsweise ein fluides Medium unter Druck durch die Rohrkupplung bzw. durch die angeschlossenen Rohrleitungen geführt wird.

Es liegt im Rahmen der Erfindung, dass die Haltefeder U-förmig ausgebildet ist und zwei an gegenüberliegenden Seiten der Aufnahmekammer angeordnete Rastschenkel aufweist, welche Rastschenkel beim Einstecken des Steckers unter Einwirkung des Rastvorsprungs elastisch auseinanderspreizbar sind. Im eingesteckten Zustand des Steckers hinterfasst der Rastvorsprung die beiden Rastschenkel rastverbindungsbildend. Beim Einführen des Steckers wird die Haltefeder also zunächst durch den Rastvorsprung aufgeweitet, indem ihre Rastschenkel auseinandergespreizt werden und nach dem Passieren des Rastvorsprungs kehren die Rastschenkel unter Einwirkung elastischer Rückstellkräfte in ihren ursprünglichen, die Aufnahmekammeröffnung verengenden Zustand zurück. In diesem Zustand (eingesteckter Zustand) des Steckers hinterfasst der Rastvorsprung die beiden Rastschenkel rastverbindungsbildend. Die beiden Rastschenkel werden beim Aufweiten der Haltefeder jeweils in einen jedem Rastschenkel zugeordneten Ausweichfreiraum der Aufnahmekammer gedrückt.

Es liegt im Rahmen der Erfindung, dass die Rastverbindung im nicht blockierten Zustand durch manuelle Einwirkung auf die Haltefeder lösbar ist. Die Rastschenkel sind zweckmäßigerweise durch eine elastische U-Basis verbunden und durch Druckbeaufschlagung der U-Basis werden die Rastschenkel auseinandergespreizt und die Rastverbindung somit gelöst. Vorzugsweise ist die U-Basis der Haltefeder in einer geeigneten Ausnehmung bzw. Öffnung des Kupplungsgehäuses aufgenommen, welche Ausnehmung bzw. Öffnung bevorzugt von außen zugänglich ist. Dann kann auf einfache Weise von außen auf die Haltefeder eingewirkt werden und die Rastverbindung gelöst werden.

Nach sehr bevorzugter Ausführungsform der Erfindung begrenzt ein Blockierelement eine Blockierkammer, in welche Blockierkammer lediglich ein Teil der Haltefeder bei Zugbelastung der Rastverbindung gezogen wird. Wenn dieser Teil der Haltefeder sich in der Blockierkammer befindet, ist ein einfaches Lösen durch Druckbeaufschlagung der U-Basis nicht mehr möglich und die Rohrkupplung befindet sich im blockierten Zustand.

Nach sehr bevorzugter Ausführungsform sind zwei Blockierelemente vorgesehen und ist jedes Blockierelement einem Rastschenkel der U-förmigen Haltefeder zugeordnet. Diese Blockierelemente blockieren im blockierten Zustand der Haltefeder ein Auseinanderspreizen der beiden Rastschenkel. Blockierter Zustand meint den Zustand bei Zugbelastung der Rastverbindung, in dem eine Aufweitung der Haltefeder bzw. der Rastschenkel blockiert ist. Es liegt im Rahmen der Erfindung, dass ein Blockierelement einen Anschlag bzw. eine Anschlagfläche für einen Rastschenkel bildet. Der Anschlag bzw. die Anschlagfläche verhindert ein Abspreizen des Rastschenkels bzw. eine radiale Bewegung des Rastschenkels. Zweckmaßigerweise ragt jedes Blockierelement in einen einem Rastschenkel zugeordneten Ausweichfreiraum hinein und teilt jeweils die Blockierkammer von dem Rest der Ausweichkammer ab. Vorzugsweise ist an einer Seite eines Blockierelementes die Blockierkammer angeordnet, in der im blockierten Zustand ein Teil der Haltefeder aufgenommen wird und ist an der gegenüberliegenden Seite des Blockierelementes ebenfalls ein Freiraum vorgesehen.

Es liegt im Rahmen der Erfindung, dass bei Zugbelastung der Rastverbindung lediglich die Rastschenkelenden der Haltefeder in die von den Blockierelementen begrenzten Blockierkammern gezogen werden. Nach dieser Ausführungsform ragen im blockierten Zustand der Haltefeder also lediglich die Rastschenkelenden in die von den Blockierelementen begrenzten Blockierkammern. Rastschenkelende meint das der U-Basis abgewandte Ende eines Rastschenkels, dessen Länge vorzugsweise weniger als ein Drittel, bevorzugt weniger als ein Viertel der gesamten Länge L des Rastschenkels beträgt.

Es liegt fernerhin im Rahmen der Erfindung, dass die Rastschenkel bzw. die Rastschenkelenden bei Zugentlastung der Rohrkupplung vorzugsweise unter Wirkung elastischer Rückstellkräfte in ihrem ursprünglichen bzw. in ihren unblockierten Zustand zurückkehren.

Nach einer bevorzugten Ausführungsform der Erfindung ist die den Blockierelementen zugewandte Außenfläche der Rastschenkelenden zum gegenüberliegenden Rastschenkel hin geneigt bzw. abgeschrägt ausgebildet. Vorzugsweise weisen die Blockierelemente eine zur Neigung bzw. Abschrägung der Außenfläche der Rastschenkelenden komplementäre Neigung bzw. Abschrägung auf. Die genannte Neigung bzw. Abschrägung ist also an der rastschenkelseitigen Innenfläche der Blockierelemente verwirklicht.

Vorzugsweise beträgt die Länge 1' der Blockierelemente in Bezug auf die radiale Ausdehnung der Aufnahmekammer weniger als zwei Drittel, vorzugsweise weniger als die Hälfte des Radius r. Zweckmäßigerweise beträgt die Länge l' der Blockierelemente weniger als die Hälfte, vorzugsweise weniger als ein Drittel der Länge L der Rastschenkel.

Der Erfindung liegt die Erkenntnis zugrunde, dass bei der erfindungsgemäßen Rohrkupplung auf einfache und funktionssichere Weise ein unbeabsichtigtes Lösen der Rastverbindung unter Zugbelastung verhindert werden kann. Bei Zugbeanspruchung der Rohrkupplung wird ein Aufweiten der Haltefeder automatisch blockiert. Insoweit handelt es sich bei der Erfindung um eine gleichsam selbstblockierende Rohrkupplung. Nichtsdestoweniger kann die Rastverbindung zwischen Stecker und Kupplungsgehäuse im zugentlasteten Zustand (wie bei den aus dem Stand der Technik bekannten Rohrkupplungen) einfach und problemlos gelöst werden. Die Zugentlastung kann auf einfache Weise manuell bzw. per Hand herbeigeführt werden, indem die verbundenen Komponenten, d. h. Stecker und Kupplungsgehäuse zusammengeschoben werden. Im Ergebnis lässt sich die Rastverbindung nur gezielt und gewollt öffnen und eine unbeabsichtigte Öffnung im zugbeanspruchten Zustand ist nicht möglich. Es muss hervorgehoben werden, dass der erfindungsgemäße Blockiereffekt mit sehr einfachen und kostengünstigen Mitteln erzielt werden kann. Im Vergleich zu den aus dem Stand der Technik bekannten Rohrkupplungen ist für die Herstellung der Komponenten der erfindungsgemäßen Rohrkupplung kein größerer bzw. kein wesentlich größerer Aufwand erforderlich. Zu betonen ist weiterhin, dass der erfindungsgemäße Blockiereffekt mit den verschiedensten Steckerarten funktionssicher erzielt wird. So findet bei Zugbelastung der Rohrkupplung auch bei Steckern mit abgerundeten Kanten am Rastvorsprung eine effektive Blockierung statt. Die eingangs erläuterten bei den aus dem Stand der Technik bekannten Rohrkupplungen auftretenden Probleme werden also vermieden.

Nachfolgend wird die Erfindung anhand einer lediglich ein Ausführungsbeispiel darstellenden Zeichnung näher erläutert. Es zeigen im schematischer Darstellung:

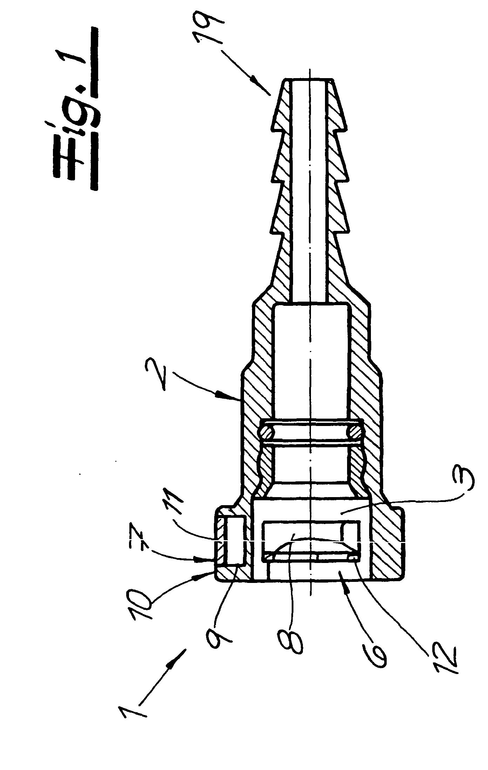

- Fig. 1: einen Längsschnitt durch eine erfindungsgemäße Rohrkupplung ohne Stecker,
- Fig. 2: einen vergrößerten Ausschnitt aus Fig. 1,
- Fig. 3: einen Schnitt A-A durch den Gegenstand nach Fig. 2 und
- Fig. 4: den Gegenstand nach Fig. 1 mit eingestecktem Stecker unter Zugbelastung.

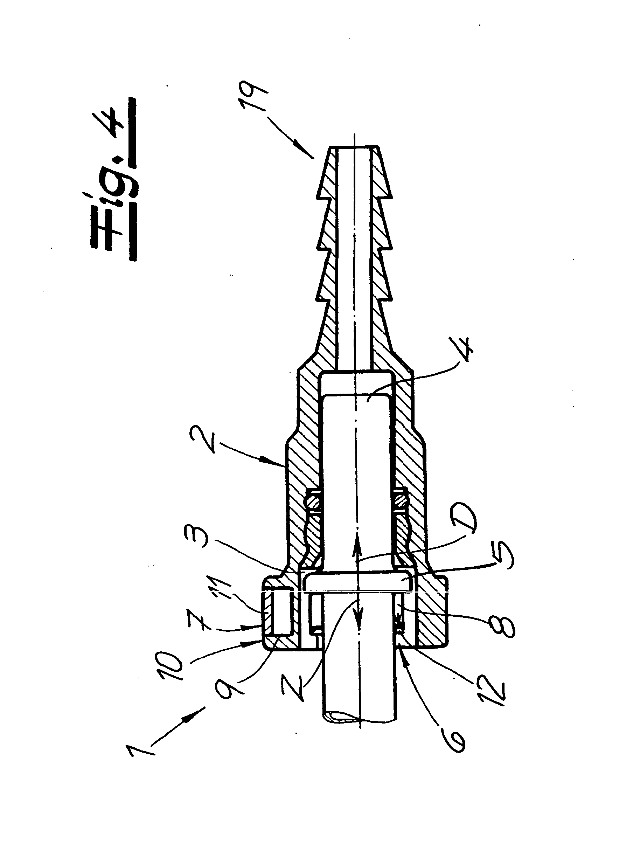

Die Figuren zeigen eine Rohrkupplung 1 für nicht näher dargestellte Rohrleitungen mit einem Kupplungsgehäuse 2, das im Ausführungsbeispiel an einer Stirnseite eine Aufnahmekammer 3 für die Aufnahme eines an einem Rohrleitungsende angeschlossenen Steckers 4 aufweist. Der Stecker 4 ist mit einem nach außen vorkragenden Rastvorsprung 5 ausgestattet (Fig. 4). Dieser Rastvorsprung 5 ist im Ausführungsbeispiel als über den Umfang des Steckers 4 umlaufender Vorsprung in Form einer Wandungsverdickung ausgebildet. Das Kupplungsgehäuse 2 der Rohrkupplung 1 besteht vorzugsweise und im Ausführungsbeispiel aus einem Kunststoff. An der der Aufnahmekammer 3 gegenüberliegenden Seite der Rohrkupplung 1 ist ein Kupplungsende 19 vorgesehen, das vorzugsweise und im Ausführungsbeispiel als Tannenbaumprofil ausgebildet ist.

In der Aufnahmekammer 3 ist eine die Aufnahmekammeröffnung 6 verengende Haltefeder 7 vorgesehen. Diese Haltefeder 7 ist vorzugsweise und im Ausführungsbeispiel U-förmig ausgebildet und weist zwei an gegenüberliegenden Seiten der Aufnahmekammer 3 angeordnete Rastschenkel 8 auf. Die Rastschenkel 8 sind vorzugsweise und im Ausführungsbeispiel elastisch ausgebildet und sind durch eine bevorzugt ebenfalls elastische U-Basis 11 miteinander verbunden. Die U-Basis 11 ist in eine außen offene Ausnehmung 9 der Aufnahmekammer 3 eingelassen und somit von außen zugänglich. Im Ausführungsbeispiel bildet die U-Basis 11 gleichsam einen Teil der Aufnahmekammerwand 10. Die Haltefeder 7 mit ihren Rastschenkeln 8 und mit der U-Basis 11 besteht zweckmäßigerweise aus Kunststoff. Beim Einstecken des Steckers 4 in die Aufnahmekammer 3 werden die Rastschenkel 8 unter Einwirkung des Rastvorsprungs 5 elastisch auseinandergespreizt. Nachdem der Rastvorsprung 5 die Rastschenkel 8 passiert hat, kehren diese unter Einwirkung elastischer Rückstellkräfte in ihren ursprünglichen die Aufnahmekammeröffnung 6 verengenden Zustand zurück. Im eingesteckten Zustand des Steckers 4 (Fig. 4) hinterfasst dann der Rastvorsprung 5 die beiden Rastschenkel 8 rastverbindungsbildend.

Es liegt im Rahmen der Erfindung, dass die Rastverbindung durch manuelle Einwirkung auf die Haltefeder 7 lösbar ist. Im Ausführungsbeispiel kann per Hand auf die in der Ausnehmung 9 aufgenommene U-Basis 11 Druck ausgeübt werden und dadurch werden die Rastschenkel 8 im nichtblockierten Zustand auseinandergespreizt. Auf diese Weise ist im nichtblockierten Zustand der Haltefeder 7 stets ein einfaches und problemloses Lösen der Rastverbindung möglich. Im nachfolgend erläuterten blockierten Zustand ist dieses Lösen der Rastverbindung nicht mehr möglich.

Erfindungsgemäß sind in der Aufnahmekammer 3 zwei als Blockiernasen ausgebildete Blockierelemente 12 vorgesehen. Wie insbesondere in der Fig. 2 erkennbar ist, sind diese Blockierelemente 12 im vorderen Bereich des Kupplungsgehäuses 2 angeordnet. Im eingesteckten und verrasteten Zustand des Steckers 4 (Fig. 4) blockieren die Blockierelemente 12 bei einer Zugbelastung der Rastverbindung eine Aufweitung der Haltefeder 7 bzw. ein Auseinanderspreizen ihrer Rastschenkel 8. Jedes Blockierelement 12 ist also einem Rastschenkel 8 der U-förmigen Haltefeder zugeordnet und diese Blockierelemente 12 blockieren im blockierten Zustand der Haltefeder 7 ein Auseinanderspreizen der beiden Rastschenkel 8. Hierzu begrenzen die Blockierelemente 12 jeweils eine Blockierkammer 13. Die Blockierelemente 12 ragen dazu in den jedem Rastschenkel 8 zugeordneten Ausweichfreiraum 14 hinein und trennen jeweils die Blockierkammer 13 von dem Rest des zugeordneten Ausweichfreiraumes 14 ab. In den Ausweichfreiräumen 14 werden die auseinandergespreizten Rastschenkel 8 bei aufgeweiteter Haltefeder 7 aufgenommen. Bei Zugbelastung der Rastverbindung (Fig. 4) werden die Rastschenkel 8 der Haltefeder 7 durch Einwirkung des Rastvorsprunges 5 in Richtung des Pfeiles Z gezogen. Dabei werden lediglich die Rastschenkelenden 15 in die von den Blockierelementen 12 begrenzten Blockierkammern 13 eingezogen bzw. eingeführt. Das ist im Übrigen in der Fig. 2 durch einen entsprechenden Pfeil angedeutet. Im blockierten Zustand der Haltefeder 7 ragen also lediglich die Rastschenkelenden 5 in die Blockierkammern 13 hinein. Wenn in diesem blockierten Zustand ein manueller Druck auf die U-Basis 11 ausgeübt wird, findet keine Aufweitung der Haltefeder 7 bzw. kein Auseinanderspreizen der Rastschenkel 8 statt. Die Blockierelemente 12 blockieren nämlich als Anschläge gleichsam eine radiale Bewegung bzw. ein Auseinanderspreizen der Rastschenkel 8. Um dennoch ein Lösen der Rastverbindung zu erreichen, kann eine Zugentlastung manuell hergestellt werden, indem der Stecker 4 in Richtung des Pfeiles D bewegt bzw. gedrückt wird. Das führt dazu, dass die Rastschenkel 8 mit ihren Rastschenkelenden 15 unter Einwirkung elastischer Rückstellkräfte aus den Blockierkammern 13 in ihren ursprünglichen unblockierten Zustand zurückgelangen. Wenn in diesem Zustand Druck auf die U-Basis 11 ausgeübt wird, kann die Haltefeder 7 wieder aufgeweitet bzw. die Rastschenkel 8 auseinandergespreizt werden und der Stecker 4 kann problemlos aus dem Kupplungsgehäuse 2 gezogen werden.

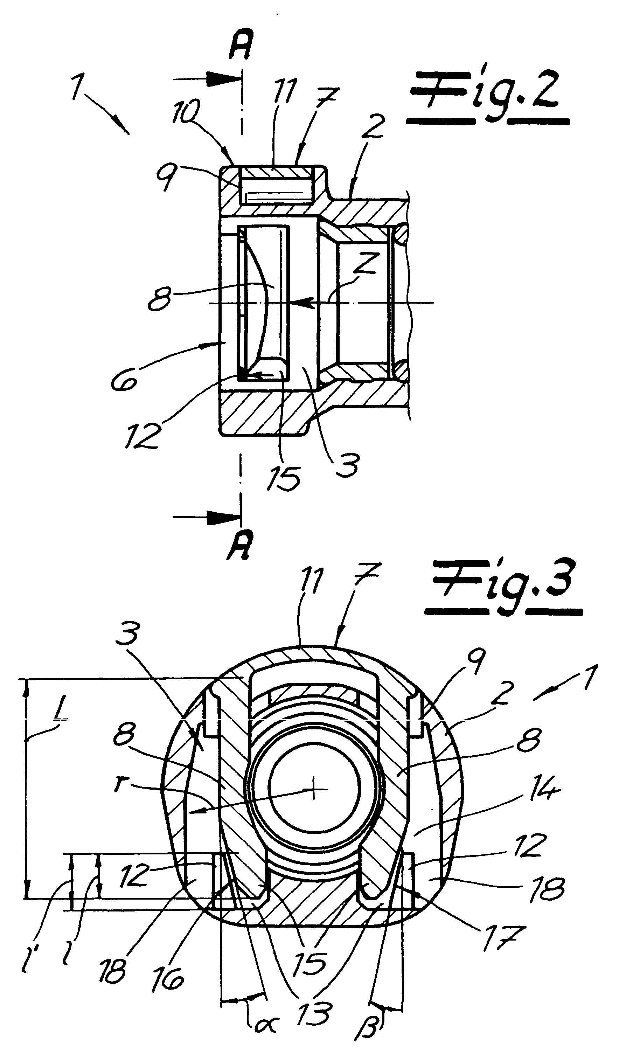

Insbesondere in der Fig. 3 ist erkennbar, dass die Länge l der in die Blockierkammern 13 hineinragenden Rastschenkelenden 15 vorzugsweise weniger als ein Drittel, bevorzugt weniger als ein Viertel der Länge L eines Rastschenkels 8 beträgt. Die Länge l' der Blockierelemente 12 beträgt zweckmäßigerweise und im Ausführungsbeispiel in Bezug auf die radiale Ausdehnung der Aufnahmekammer 3 weniger als die Hälfte des Radius r der Aufnahmekammer 3. Fernerhin beträgt die Länge l' der Blockierelemente 12 weniger als ein Drittel der Länge L der Rastschenkel 8.

In der Fig. 3 ist weiterhin erkennbar, dass nach bevorzugter Ausführungsform der Erfindung die den Blockierelementen 12 zugewandte Außenfläche 16 der Rastschenkelenden 15 zum gegenüberliegenden Rastschenkel 8 hin geneigt bzw. abgeschrägt ausgebildet ist. Der entsprechende Neigungswinkel α beträgt zweckmäßigerweise 5 bis 50°, vorzugsweise 10 bis 35°, bevorzugt 10 bis 25° und im Ausführungsbeispiel 15°. Es liegt fernerhin im Rahmen der Erfindung, dass auch die Blockierelemente 12 eine zur Neigung bzw. Abschrägung der Außenfläche 16 komplementäre Neigung der rastschenkelseitigen Innenfläche 17 aufweisen. Der entsprechende Neigungswinkel β beträgt dabei ebenfalls zweckmäßigerweise 5 bis 50°, vorzugsweise 10 bis 35°, bevorzugt 10 bis 25°. Die vorgenannten Neigungen bzw. Abschrägungen haben sich im Rahmen der Erfindung besonders bewährt. In der Fig. 3 kann man außerdem erkennen, dass die Blockierelemente 12 den unteren Teil der Ausweichfreiräume 14 zum einen in die Blockierkammern 13 aufteilen und zum anderen in die Freiräume 18, die an der gegenüberliegenden Seite der Blockierelemente 12 eingerichtet sind.

## Patentansprüche

1. Rohrkupplung (1) für Rohrleitungen, - mit einem Kupplungsgehäuse (2), das an zumindest einer Stirnseite eine Aufnahmekammer (3) für die Aufnahme eines an einem Rohrleitungsende angeschlossenen Steckers (4) mit zumindest einem nach außen vorkragenden Rastvorsprung (5) aufweist, wobei in der Aufnahmekammer (3) eine die Aufnahmekammeröffnung (6) verengende Haltefeder (7) vorgesehen ist, wobei die Haltefeder (7) beim Einstecken des Steckers (4) durch Einwirkung des Rastvorsprunges (5) elastisch aufweitbar ist und wobei der Rastvorsprung (5) im eingesteckten Zustand des Steckers (4) die Haltefeder rastverbindungsbildend hinterfasst, **dadurch gekennzeichnet, dass** in der Aufnahmekammer (3) zumindest ein Blockierelement (12) vorgesehen ist, welches eine Aufweitung der Haltefeder (7) im eingesteckten und verrasteten Zustand des Steckers (4) bei Zugbelastung der Rastverbindung blockiert und bei Zugentlastung nicht blockiert.

2. Rohrkupplung nach Anspruch 1, **dadurch gekennzeichnet, dass** die Haltefeder (7) U-förmig ausgebildet ist und zwei an gegenüberliegenden Seiten der Aufnahmekammer (3) angeordnete Rastschenkel (8) aufweist, welche Rastschenkel (8) beim Einstecken des Steckers (4) unter Einwirkung des Rastvorsprunges (5) elastisch auseinanderspreizbar sind und wobei der Rastvorsprung (5) im eingesteckten Zustand des Steckers (4) die beiden Rastschenkel (8) rastverbindungsbildend hinterfasst.

3. Rohrkupplung nach einem der Ansprüche 1 oder 2, **dadurch gekennzeichnet, dass** die Rastverbindung durch manuelle Einwirkung auf die Haltefeder 7 lösbar ist.

4. Rohrkupplung nach einem der Ansprüche 1 bis 3, **dadurch gekennzeichnet, dass** ein Blockierelement (12) eine Blockierkammer (13) begrenzt, in welche Blockierkammer (13) lediglich ein Teil der Haltefeder (7) bei Zugbelastung der Rastverbindung gezogen wird.

5. Rohrkupplung nach einem der Ansprüche 2 bis 4, **dadurch gekennzeichnet, dass** zwei Blockierelemente (12) vorgesehen sind, wobei jedes Blockierelement (12) einem Rastschenkel (8) der U-förmigen Haltefeder (7) zugeordnet ist und wobei die Blockierelemente (12) im blockierten Zustand der Haltefeder (7) ein Auseinanderspreizen der beiden Rastschenkel (8) blockieren.

6. Rohrkupplung nach einem der Ansprüche 2 bis 5, **dadurch gekennzeichnet, dass** jedes Blockierelement (12) in einen einem Rastschenkel (8) zugeordneten Ausweichfreiraum (14) hineinragt und jeweils die Blockierkammer (13) von dem Rest des Ausweichfreiraumes (14) abteilt.

7. Rohrkupplung nach einem der Ansprüche 2 bis 6, **dadurch gekennzeichnet, dass** im blockierten Zustand der Haltefeder (7) lediglich die Rastschenkelenden (15) in die von den Blockierelementen (12) begrenzten Blockierkammern (13) hineinragen.

8. Rohrkupplung nach einem der Ansprüche 2 bis 7, **dadurch gekennzeichnet, dass** die den Blockierelementen 12 zugewandten Außenflächen (16) der Rastschenkelenden (15) zum gegenüberliegenden Rastschenkel (8) hin geneigt ausgebildet ist.

9. Rohrkupplung nach Anspruch 8, **dadurch gekennzeichnet, dass** die Blockierelemente (12) eine zur Neigung der Außenfläche (16) der Rastschenkelenden (15) komplementäre Neigung oder in etwa komplementäre Neigung aufweisen.

10. Rohrkupplung nach einem der Ansprüche 1 bis 9, **dadurch gekennzeichnet, dass** die Länge l' der Blockierelemente (12) in Bezug auf die radiale Ausdehnung der Aufnahmekammer (3) weniger als zwei Drittel, vorzugsweise weniger als die Hälfte des Radius r beträgt.

11. Rohrkupplung nach einem der Ansprüche 2 bis 10, **dadurch gekennzeichnet, dass** die Länge l' der Blockierelemente (12) weniger als die Hälfte, vorzugsweise weniger als ein Drittel der Länge L der Rastschenkel (8) beträgt.

## Claims

1. Pipe coupling (1) for pipelines, with a coupling housing (2) which, on at least one end face, has a receiving chamber (3) for receiving a connector (4) which is attached to a pipeline end and is provided with at least one outwardly protruding locking projection (5), a retaining spring (7) being provided in the retaining chamber (3) and narrowing the mouth (6) of said receiving chamber, which retaining spring (7), upon insertion of the connector (4), can be elastically widened by the action of the locking projection (5), and, when the connector (4) is in the inserted state, the locking projection (5) engages behind the retaining spring to form a locking connection, **characterized in that** at least one blocking element (12), provided in the receiving chamber (3), blocks a widening of the retaining spring (7) in the inserted and locked state of the connector (4) during tensile loading of the locking connection and, when this tensile loading is cancelled, does not block said widening.

2. Pipe coupling according to Claim 1, **characterized in that** the retaining spring (7) is of a U-shaped configuration and has two locking branches (8) arranged on opposite sides of the receiving chamber (3), which locking branches (8) can be spread elastically apart under the action of the locking projection (5) upon insertion of the connector (4), and the locking projection (5), when the connector (4) is in the inserted state, engages behind the two locking branches (8) to form a locking connection.

3. Pipe coupling according to either of Claims 1 and 2, **characterized in that** the locking connection can be released by manual action on the retaining spring (7).

4. Pipe coupling according to one of Claims 1 to 3, **characterized in that** a blocking element (12) delimits a blocking chamber (13), into which blocking chamber (13) only a part of the retaining spring (7) is drawn during tensile loading of the locking connection.

5. Pipe coupling according to one of Claims 2 to 4, **characterized in that** two blocking elements (12) are provided, each blocking element (12) being assigned to a locking branch (8) of the U-shaped retaining spring (7), and the blocking elements (12) block any spreading-apart of the two locking branches (8) when the retaining spring (7) is in the blocked state.

6. Pipe coupling according to one of Claims 2 to 5, **characterized in that** each blocking element (12) protrudes into a clearance area (14) assigned to a locking branch (8) and in each case divides the blocking chamber (13) off from the rest of the clearance area (14).

7. Pipe coupling according to one of Claims 2 to 6, **characterized in that**, in the blocked state of the retaining spring (7), only the ends (15) of the locking branches protrude into the blocking chambers (13) delimited by the blocking elements (12).

8. Pipe coupling according to one of Claims 2 to 7, **characterized in that** the outer surfaces (16) of the ends (15) of the locking branches facing towards the blocking elements (12) are designed inclined towards the opposite locking branch (8).

9. Pipe coupling according to Claim 8, **characterized in that** the blocking elements (12) have an inclination complementing the inclination of the outer surface (16) of the ends (15) of the locking branches, or have an approximately complementary inclination.

10. Pipe coupling according to one of Claims 1 to 9, **characterized in that** the length 1' of the blocking elements (12) in relation to the radial extent of the receiving chamber (3) is less than two thirds, preferably less than half the radius r.

11. Pipe coupling according to one of Claims 2 to 10, **characterized in that** the length 1' of the blocking elements (12) is less than half, preferably less than a third of the length L of the locking branches (8).

## Revendications

1. Couplage tubulaire (1) pour tuyauteries, comprenant un corps de couplage (2) qui comporte sur au moins une surface d'attaque frontale un compartiment de logement (3) pour loger un connecteur (4), raccordé à une extrémité de tuyauterie et pourvu d'au moins une saillie d'encliquetage (5) dépassant vers l'extérieur, un ressort de retenue (7) rétrécissant l'ouverture (6) du compartiment de logement (3) étant prévu dans ce dernier, le ressort de retenue (7) pouvant être élargi par élasticité lors de l'enfichage du connecteur (4) sous l'effet de la saillie d'encliquetage (5) et, la saillie d'encliquetage (5), à l'état d'enfichage du connecteur (4), enserrant le ressort de retenue en formant un assemblage par encliquetage, **caractérisé en ce qu'**au moins un élément de blocage (12) est prévu dans le compartiment de logement (3), ledit élément bloquant un élargissement du ressort de retenue (7) à l'état d'enfichage et de verrouillage du connecteur (4) sous contrainte de traction de l'assemblage par encliquetage et ne le bloquant pas sous décharge de traction.

2. Couplage tubulaire suivant la revendication 1, **caractérisé en ce que** le ressort de retenue (7) a une configuration en U et comporte deux branches d'encliquetage (8) disposées sur des côtés opposés du compartiment de logement (3), lesdites branches d'encliquetage (8), lors de l'enfichage du connecteur (4), pouvant être écartées l'une de l'autre par élasticité sous l'effet de la saillie d'encliquetage (5) et la saillie d'encliquetage (5), à l'état d'enfichage du connecteur (4), enserrant les deux branches d'encliquetage (8) en formant un assemblage par encliquetage.

3. Couplage tubulaire suivant l'une des revendications 1 et 2, **caractérisé en ce que** l'assemblage par encliquetage peut être débloqué par action manuelle sur le ressort de retenue (7).

4. Couplage tubulaire suivant l'une des revendications 1 à 3, **caractérisé en ce qu'**un élément de blocage (12) délimite un compartiment de blocage (13), compartiment (13) dans lequel seule une partie du ressort de retenue (7) peut être tirée sous contrainte de traction de l'assemblage par encliquetage.

5. Couplage tubulaire suivant l'une des revendications 2 à 4, **caractérisé en ce que** deux éléments de blocage (12) sont prévus, chaque élément de blocage étant associé à une branche d'encliquetage (8) du ressort de retenue en U (7) et les éléments de blocage (12), à l'état de blocage du ressort de retenue (7), bloquant un écartement mutuel des deux branches d'encliquetage (8).

6. Couplage tubulaire suivant l'une des revendications 2 à 5, **caractérisé en ce que** chaque élément de blocage (12) pénètre dans un dégagement de déport (14) associé à une branche d'encliquetage (8) et sépare le compartiment de blocage (13) du reste du dégagement de déport (14).

7. Couplage tubulaire suivant l'une des revendications 2 à 6, **caractérisé en ce que**, à l'état de blocage du ressort de retenue (7), seules les extrémités (15) des branches d'encliquetage pénètrent dans les compartiments de blocage (13) délimités par les éléments de blocage (12).

8. Couplage tubulaire suivant l'une des revendications 2 à 7, **caractérisé en ce que** les surfaces extérieures (16) des extrémités (15) des branches d'encliquetage, tournées vers les éléments de blocage (12), ont une configuration inclinée en direction de la branche d'encliquetage (8) en vis-à-vis.

9. Couplage tubulaire suivant la revendication 8, **caractérisé en ce que** les éléments de blocage (12) présentent une inclinaison complémentaire ou à peu près complémentaire à l'inclinaison de la surface extérieure (16) des extrémités (15) des branches d'encliquetage.

10. Couplage tubulaire suivant l'une des revendications 1 à 9, **caractérisé en ce que** la longueur 1' des éléments de blocage (12) représente moins de deux tiers, de préférence moins de la moitié du rayon r, par rapport à l'extension radiale du compartiment de logement (3).

11. Couplage tubulaire suivant l'une des revendications 2 à 10, **caractérisé en ce que** la longueur 1' des éléments de blocage (12) représente moins de la moitié, de préférence moins d'un tiers de la longueur L des branches d'encliquetage (8).
